# EUROPEAN PATENT APPLICATION

(11) **EP 4 207 915 A1**
(43) Date of publication of application: **05.07.2023**
(21) Application number: 20950572.6
(22) Date of filing: 25.08.2020
(51) Int. Cl.: H04W 72/12, H04W 76/28

(54) **TRANSMISSION SCHEDULING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LIU, Yang, Beijing 100085 (CN)
(74) Representative: Hughes, Andrea Michelle
(86) International application number: PCT/CN2020/110988
(87) International publication number: WO 2022/040897

(57) **Abstract**

Embodiments of the present invention relate to a transmission scheduling method and apparatus, a communication device, and a storage medium. The base station performs uplink pre-scheduling on the base station, and adjusts a time interval for performing the uplink pre-scheduling on the basis of a receiving condition of uplink data on a resource scheduled by the uplink pre-scheduling for a predetermined number of times.

## Description

### FIELD

The present application relates to, but is not limited to, the technical field of wireless communication, and in particular, to a transmission scheduling method, a transmission scheduling apparatus, a communication device, and a storage medium.

### BACKGROUND

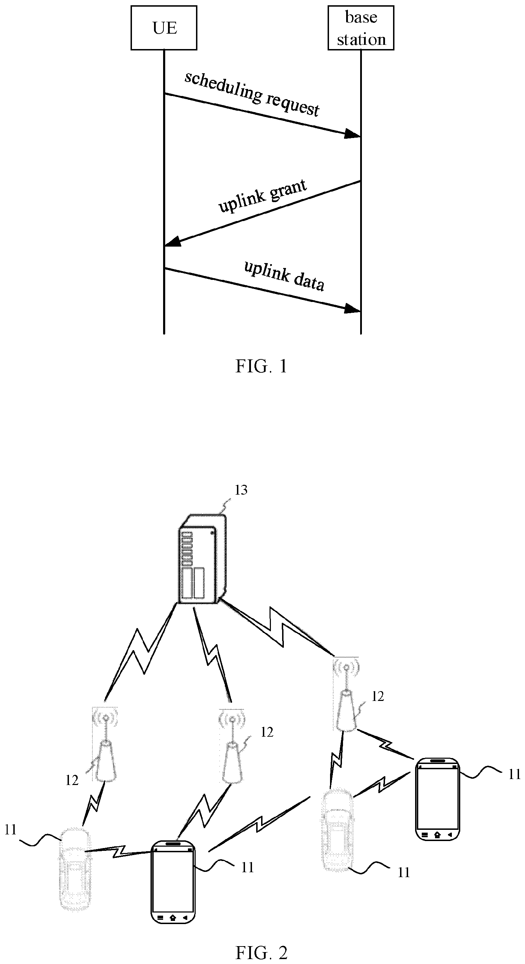

There are two kinds of uplink data scheduling, i.e. dynamic scheduling and semi-static scheduling (grant free). As shown in FIG. 1, the dynamic scheduling generally involves requesting uplink data by a user equipment (UE), sending an uplink grant (UL GRANT) by a base station to the UE, and receiving the UL GRANT and then transmitting uplink data by the UE. The advantage of the dynamic scheduling is flexible and dynamic, and the disadvantage of the dynamic scheduling is one data uplink apply for one grant with a scheduling delay.

In order to support a low delay or specific class of service, the semi-static scheduling, i.e. a scheduling-free mode, is introduced. Uplink data may be transmitted by configuring a certain scheduling period, and the scheduling-free mode is also referred to as semi-continuous scheduling. The advantage of the semi-static scheduling is that there is no scheduling delay, which is suitable for a low delay service. The disadvantage of the semi-static scheduling is that when the UE does not have uplink data, a radio resource is wasted. Moreover, the semi-static scheduling needs to be configured by using a radio resource control (RRC) layer, which is not flexible enough.

### SUMMARY

In view of this, embodiments of the present disclosure provide a transmission scheduling method, a transmission scheduling apparatus, a communication device, and a storage medium.

According to a first aspect of the embodiments of the present disclosure, there is provided a transmission scheduling method, which is applied to a base station. The method includes performing uplink pre-scheduling for the base station, and adjusting a time interval for the uplink pre-scheduling based on a reception of uplink data on a resource scheduled by the uplink pre-scheduling for a predetermined number of times.

In an embodiment, adjusting the time interval for the uplink pre-scheduling based on the reception of uplink data on the resource scheduled by the uplink pre-scheduling for the predetermined number of times includes increasing the time interval for the uplink pre-scheduling in response to not receiving the uplink data on the resource scheduled by the uplink pre-scheduling for the predetermined number of times.

In an embodiment, increasing the time interval for the uplink pre-scheduling includes determining a sum of a current time interval for the uplink pre-scheduling and a time interval increment as the time interval for the uplink pre-scheduling.

In an embodiment, the method further includes maintaining the current time interval for the uplink pre-scheduling in response to not receiving the uplink data on the resource scheduled by the uplink pre-scheduling for the predetermined number of times, and in response to the current time interval for the uplink pre-scheduling being greater than or equal to an interval threshold.

In an embodiment, the method further includes stopping the uplink pre-scheduling in response to not receiving the uplink data on the resource scheduled by the uplink pre-scheduling for the predetermined number of times, and in response to the current time interval for the uplink pre-scheduling being greater than or equal to an interval threshold.

In an embodiment, the interval threshold is an integer multiple of the time interval increment.

In an embodiment, adjusting the time interval for the uplink pre-scheduling based on the reception of uplink data on the resource scheduled by the uplink pre-scheduling for the predetermined number of times includes determining the time interval for the uplink pre-scheduling as a predetermined time interval in response to receiving the uplink data on the resource scheduled by the uplink pre-scheduling for the predetermined number of times.

In an embodiment, the uplink pre-scheduling is performed in response to scheduling downlink data, and the downlink data scheduled satisfying a pre-scheduling condition.

In an embodiment, the uplink pre-scheduling includes sending an uplink grant (UL Grant).

According to a second aspect of the embodiments of the present disclosure, there is provided a transmission scheduling apparatus, which is applied to a base station. The apparatus includes a first control module configured to perform uplink pre-scheduling for the base station, and adjusting a time interval for the uplink pre-scheduling based on a reception of uplink data on a resource scheduled by the uplink pre-scheduling for a predetermined number of times.

In an embodiment, the first control module includes a first control submodule configured to increase the time interval for the uplink pre-scheduling in response to not receiving the uplink data on the resource scheduled by the uplink pre-scheduling for the predetermined number of times.

In an embodiment, the first control submodule includes a control unit configured to determine a sum of a current time interval for the uplink pre-scheduling and a time interval increment as the time interval for the uplink pre-scheduling.

In an embodiment, the apparatus further includes a second control module configured to maintain the current time interval for the uplink pre-scheduling in response to not receiving the uplink data on the resource scheduled by the uplink pre-scheduling for the predetermined number of times, and in response to the current time interval for the uplink pre-scheduling being greater than or equal to an interval threshold.

In an embodiment, the apparatus further includes a third control module configured to stop the uplink pre-scheduling in response to not receiving the uplink data on the resource scheduled by the uplink pre-scheduling for the predetermined number of times, and in response to the current time interval of the uplink pre-scheduling being greater than or equal to an interval threshold.

In an embodiment, the interval threshold is an integer multiple of the time interval increment.

In an embodiment, the first control module includes a second control submodule configured to determine the time interval for the uplink pre-scheduling as a predetermined time interval in response to receiving the uplink data on the resource scheduled by the uplink pre-scheduling for the predetermined number of times.

In an embodiment, the uplink pre-scheduling is performed in response to scheduling downlink data and the downlink data scheduled satisfying a pre-scheduling condition.

In an embodiment, the uplink pre-scheduling includes sending an uplink grant (UL Grant).

According to a third aspect of the embodiments of the present disclosure, there is provided a communication device, including a processor; a memory; and an executable program stored in the memory and capable of being run by the processor, in which the processor is configured to execute steps of the transmission scheduling apparatus described in the first aspect or the second aspect when running the executable program.

According to a fourth aspect of the embodiments of the present disclosure, there is provided a storage medium having stored therein executable programs that, when executed by a processor, cause steps of the transmission scheduling apparatus described in the first aspect or the second aspect to be implemented.

With the transmission scheduling method, the transmission scheduling apparatus, the communication device, and the storage medium provided according to the embodiments of the present disclosure, the base station performs the uplink pre-scheduling for the base station, and adjusts the time interval for the uplink pre-scheduling based on the reception of uplink data on the resource scheduled by the uplink pre-scheduling for the predetermined number of times. In this way, the time interval for the uplink pre-scheduling is adjusted based on the reception of uplink data. On the one hand, the uplink pre-scheduling can meet actual transmission requirements of uplink data. On the other hand, increasing the time interval for the uplink pre-scheduling increases the probability that the UE may enter a DRX Off state and reduces power consumption of the UE when there is less uplink data.

It is to be understood that both the foregoing general description and the following detailed description are illustrative and explanatory only and are not restrictive of the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the embodiments of the present disclosure.
FIG. 1 is a schematic diagram showing an interaction of uplink data dynamic scheduling information according to an illustrative embodiment.
FIG. 2 is a schematic diagram showing a wireless communication system according to an illustrative embodiment.
FIG. 3 is a schematic diagram showing an interaction of uplink data semi-static state scheduling information according to an illustrative embodiment.
FIG. 4 is a flow chart showing a transmission scheduling method according to an illustrative embodiment.
FIG. 5 is a flow chart showing another transmission scheduling method according to an illustrative embodiment.
FIG. 6 is a block diagram showing a transmission scheduling apparatus according to an illustrative embodiment.
FIG. 7 is a block diagram showing an apparatus for transmission scheduling according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are only for the purpose of describing specific embodiments, but should not be construed to limit the present disclosure. As used in the embodiments of the present disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if' may be construed to mean "when" or "upon" or "in response to determining" depending on the context.

Referring to FIG. 2, which is a schematic diagram showing a wireless communication system provided by an embodiment of the present disclosure. As shown in FIG. 2, the wireless communication system is a communication system based on a cellular mobile communication technology, and may include several terminals 11 and several base stations 12.

The terminal 11 may be a device that provides voice and/or data connectivity to a user. The terminal 11 can communicate with one or more core networks via a radio access network (RAN). The terminal 11 can be an Internet of Things terminal, such as a sensor device, a mobile phone (or referred to as a "cellular" phone) and a computer with an Internet of Things terminal. For example, it can be a fixed, portable, pocket-sized, handheld, built-in computer or vehicle-mounted apparatus. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the terminal 11 may be a device of an unmanned aerial vehicle. Alternatively, the terminal 11 may be a vehicle-mounted device, for example, a driving computer with a wireless communication function, or a wireless communication device externally connected with a driving computer. Alternatively, the terminal 11 may be a roadside device, such as a street lamp, a signal lamp or other roadside devices with a wireless communication function.

The base station 12 may be a network side device in the wireless communication system. The wireless communication system can be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system can be referred to as a new generation-radio access network (NG-RAN), or a MTC system.

The base station 12 may be an evolved base station (eNB) used in the 4G system. Alternatively, the base station 12 may be a centralized distributed architecture base station (gNB) used in the 5G system. When the base station 12 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 12 is not limited in the embodiments of the present disclosure.

A wireless connection can be established between the base station 12 and the terminal 11 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio can also be a wireless radio based on the next generation mobile communication network technology standard of the 5G.

In some embodiments, an end to end (E2E) connection may also be established between the terminals 11, for example, a vehicle to vehicle (V2V) communication, a vehicle to infrastructure (V2I) communication and a vehicle to pedestrian (V2P) communication in a vehicle to everything (V2X) communication.

In some embodiments, the wireless communication system may further include a network management device 13.

Several base stations 12 are connected to the network management device 13, respectively. The network management device 13 may be a core network device in the wireless communication system, for example, the network management device 13 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS). The implementation form of the network management device 13 is not limited in the embodiment of the present disclosure.

Executors involved in embodiments of the present disclosed include, but are not limited to, a UE such as a mobile phone terminal that supports cellular mobile communication, a base station, etc.

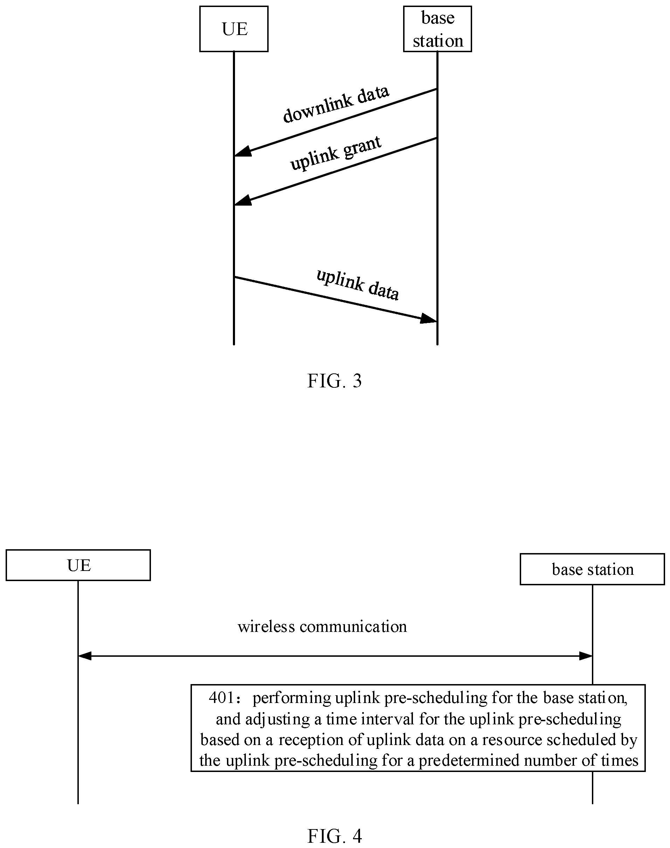

An application scenario of the embodiments of the present disclosure is that at present, as shown in FIG. 3, an uplink pre-scheduling scheme is proposed at a communication system side. Usually, a UE has a certain probability of having uplink data when a base station has downlink data to be scheduled. The base station can make a prediction when it is uncertain whether the UE has uplink data. The base station sends uplink pre-scheduling when the predicted probability of having uplink data reaches a certain threshold. The advantage of this method is that it is more flexible than semi-static scheduling, and has a lower delay than an uplink dynamic scheduling request, which is between the two schemes.

The uplink pre-scheduling has its advantages, but it brings a side effect: the power consumption of the UE is increased compared with uplink dynamic scheduling. When uplink pre-scheduling is performed for the base station, and there is less need for the UE to actually send uplink data, the time to enter the connected non-receiving state (DRX off) will be extended when the connected UE detects the uplink scheduling DCI, resulting in an increase in power consumption of the UE. If just the UE has more uplink data, there is no significant increase in power consumption.

As shown in FIG. 4, this illustrative embodiment provides a transmission scheduling method, which may be applied to a base station of a cellular mobile communication system. The method includes step 401.

In step 401, uplink pre-scheduling is performed for the base station, and a time interval for the uplink pre-scheduling is adjusted based on a reception of uplink data on a resource scheduled by the uplink pre-scheduling for a predetermined number of times.

The base station may include, but is not limited to, a base station in the cellular mobile communication system. The UE may include, but is not limited to, a UE in the cellular mobile communication system.

Here, the uplink pre-scheduling may be uplink scheduling performed by the base station based on the prediction of uplink data transmission after sending downlink data. The base station can indicate a resource for transmitting uplink data to the UE through DCI, etc., when performing the uplink pre-scheduling. The resource for transmitting uplink data is not requested by the UE. If the UE has uplink data to be transmitted, the UE can transmit uplink data through the resource. In a time domain of uplink pre-scheduling, if the UE does not have uplink data to be transmitted, it will not enter the DRX Off state, thus generating additional power consumption.

The base station can determine the reception of uplink data after each uplink pre-scheduling. Here, the reception of uplink data may include whether the uplink data is received. That is, the base station can determine whether there is uplink data in each uplink pre-scheduling.

The predetermined number of times may be one or more. The predetermined number of times may be determined by the base station. Adjusting the time interval for the uplink pre-scheduling according to the reception of uplink data on the resource scheduled by the uplink pre-scheduling for one times can improve the timeliness of time interval adjustment. Adjusting the time interval for the uplink pre-scheduling according to the reception of uplink data on the resource scheduled by the uplink pre-scheduling for more times can improve the reliability of uplink data statistics and the reliability of time interval adjustment.

The base station may adjust the time interval between uplink pre-schedulings based on the reception of uplink data for all the uplink pre-schedulings. In the time interval between uplink pre-schedulings, the base station may not perform uplink pre-scheduling. Adjusting the time interval between the uplink pre-schedulings may include increasing the time interval, decreasing the time interval, etc.

Illustratively, a ratio of the number of uplink pre-schedulings with uplink data to the predetermined number of times may be determined in the uplink pre-schedulings for the predetermined number of times. If the ratio is greater than a ratio threshold, it means that the UE needs to transmit more uplink data, the time interval between uplink pre-schedulings may be reduced, and the number of times of uplink pre-scheduling in the same time may be increased so as to transmit more data. If the ratio is smaller than the ratio threshold, it means that the UE needs to transmit less uplink data, the time interval between uplink pre-schedulings may be increased, and the number of times of uplink pre-scheduling in the same time may be reduced, thus reducing the power consumption of the UE.

In this way, the time interval for the uplink pre-scheduling is adjusted based on the reception of uplink data. On the one hand, the uplink pre-scheduling can meet actual transmission requirements of uplink data. On the other hand, when there is less uplink data, increasing the time interval for the uplink pre-scheduling can increase the probability that the UE may enter the DRX Off state, and reduce the power consumption of the UE.

In an embodiment, adjusting the time interval for the uplink pre-scheduling based on the reception of uplink data on the resource scheduled by the uplink pre-scheduling for the predetermined number of times includes increasing the time interval for the uplink pre-scheduling in response to not receiving the uplink data on the resource scheduled by the uplink pre-scheduling for the predetermined number of times.

The fact that the uplink data is not received on the resource scheduled by the uplink pre-scheduling for the predetermined number of times indicates a small probability that the UE needs to transmit uplink data. Then, the time interval for the uplink pre-scheduling may be increased. During the time interval for the uplink pre-scheduling, even if the base station predicts that the UE has a high probability of having uplink data, the uplink pre-scheduling is not performed. Thus, the probability that the UE may enter the DRX Off state is increased, and the power consumption of the UE is reduced.

In an embodiment, increasing the time interval for the uplink pre-scheduling includes determining a sum of a current time interval for the uplink pre-scheduling and a time interval increment as the time interval for the uplink pre-scheduling.

Here, the time interval increment T may be set in advance, and if the uplink data is not received on the resource scheduled by the uplink pre-scheduling for the predetermined number of times, the time interval is increased by T on the basis of the current time interval.

Illustratively, the uplink data in the uplink pre-scheduling for n times may be detected, where n is a positive integer greater than or equal to 1. When uplink data are not detected in the uplink pre-scheduling for the n times, the time interval for the uplink pre-scheduling may be increased by time T. Assuming that the current time interval is 0, the increased time interval is T. If uplink data are still not received after uplink pre-scheduling for further n times, the time interval T is increased by T again to obtain 2T.

In this way, for the case where the probability of uplink data transmission is small, the time interval for the uplink pre-scheduling is increased, such that the probability that the UE may enter the DRX Off state is increased, and the power consumption of the UE is reduced.

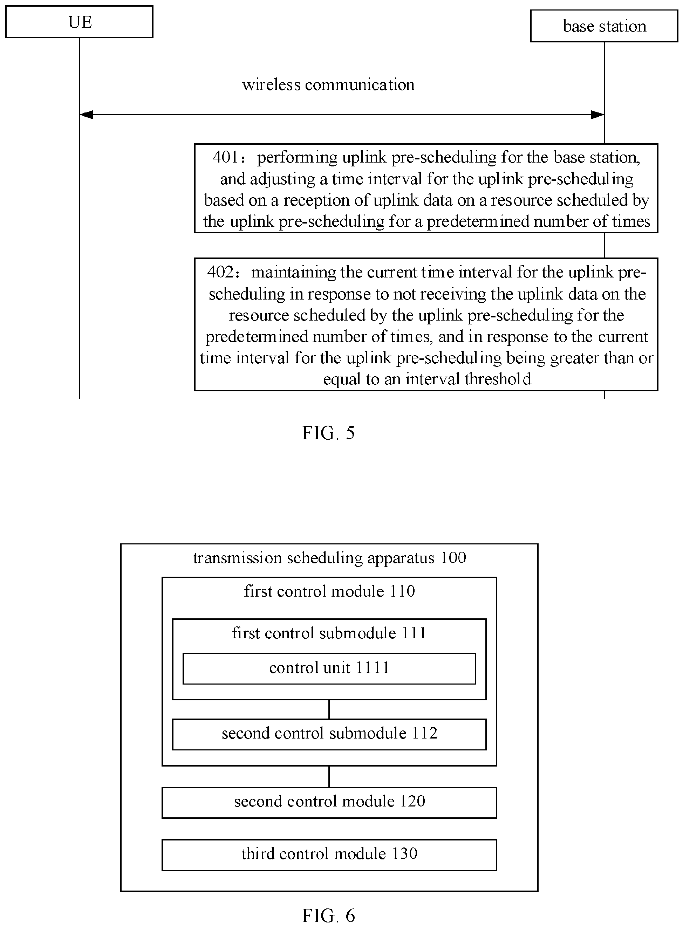

In an embodiment, as shown in FIG. 5, the method further includes step 402.

In step 402, the current time interval for the uplink pre-scheduling is maintained in response to not receiving the uplink data on the resource scheduled by the uplink pre-scheduling for the predetermined number of times, and in response to the current time interval for the uplink pre-scheduling being greater than or equal to an interval threshold.

The base station may determine an upper limit of the increased time interval for the uplink pre-scheduling, that is, the interval threshold. When the time interval for the uplink pre-scheduling is greater than or equal to the interval threshold, the time interval will not be increased.

Illustratively, when no uplink data is detected after k rounds of predetermined times of uplink pre-scheduling, the time interval for the uplink pre-scheduling increases from 0 to kT, where T represents the time interval increment, and k represents the number of times of increasing the time interval. When kT is greater than or equal to the interval threshold, the base station may no longer increase the time interval, but keep the time interval kT unchanged. The base station may also set a maximum value K of k, and when k is equal to K, the time interval will not be increased.

In an embodiment, the method further includes stopping the uplink pre-scheduling in response to not receiving the uplink data on the resource scheduled by the uplink pre-scheduling for the predetermined number of times, and in response to the current time interval for the uplink pre-scheduling being greater than or equal to an interval threshold.

The base station may determine an upper limit of the increased time interval for the uplink pre-scheduling, that is, the interval threshold. When the time interval for the uplink pre-scheduling is greater than or equal to the interval threshold, it means that the current uplink pre-scheduling cannot play the expected role, so the uplink pre-scheduling may be stopped.

Illustratively, when no uplink data is detected after k rounds of predetermined times of uplink pre-scheduling, the time interval for the uplink pre-scheduling increases from 0 to kT, where T represents the time interval increment, and k represents the number of times of increasing the time interval. When kT is greater than or equal to the interval threshold, the base station may stop the uplink pre-scheduling, but keep the time interval kT unchanged. The base station may also set a maximum value K of k, and when k is equal to K, the uplink pre-scheduling may be stopped.

In an embodiment, the interval threshold is an integer multiple of the time interval increment.

When no uplink data is detected after k rounds of predetermined times of uplink pre-scheduling, the time interval for the uplink pre-scheduling increases from 0 to kT, where T represents the time interval increment, and k represents the number of times of increasing the time interval. When kT is greater than or equal to the interval threshold, the base station may no longer increase the time interval, but keep the time interval kT unchanged. The base station may also set a maximum value K of k, and when k is equal to K, the time interval will not be increased. That is, the interval threshold is KT.

In an embodiment, adjusting the time interval for the uplink pre-scheduling based on the reception of uplink data on the resource scheduled by the uplink pre-scheduling for the predetermined number of times includes determining the time interval for the uplink pre-scheduling as a predetermined time interval in response to receiving the uplink data on the resource scheduled by the uplink pre-scheduling for the predetermined number of times.

Here, the predetermined time interval may be a default time interval for the uplink pre-scheduling. For example, the predetermined time interval may be 0.

When the uplink data is received on the resource scheduled by the uplink pre-scheduling, it may be judged that the prediction of the uplink data by the base station is accurate. Moreover, the UE has uplink data that needs to be transmitted. Therefore, the time interval for the uplink pre-scheduled may be restored to the predetermined time interval, thus improving uplink data transmission efficiency and reducing uplink data delay.

In an embodiment, the uplink pre-scheduling is performed in response to scheduling downlink data and the downlink data scheduled satisfying a pre-scheduling condition.

The uplink pre-scheduling may be uplink scheduling performed by the base station based on the prediction of uplink data transmission after sending the downlink data.

The pre-scheduling condition may be determined in a predicted manner. For example, the base station performs prediction based on a service type of the uplink data, and the pre-scheduling condition may be whether the downlink data is of a predetermined service type.

The base station can perform prediction based on the service type of the downlink data, etc. For example, if the service type of the downlink data is of a session type, and the probability of performing uplink data transmission is high, the uplink pre-scheduling may be performed.

In an embodiment, the uplink pre-scheduling includes sending an uplink grant (UL Grant).

The base station can indicate, by sending the UL Grant, the resource scheduled by the uplink pre-scheduling to the UE. The UE determines the resource that may be used for the uplink data transmission by parsing the UL Grant. The UE may transmit uplink data through the resource when it has the uplink data that needs to be transmitted.

A specific example is provided below in conjunction with any of the above-mentioned embodiments.
1. When a base station has downlink data for a certain UE, uplink pre-scheduling is enabled, that is, an uplink scheduling grant is sent.
2. If the base station detects uplink data of the UE and there is downlink data scheduling, uplink scheduling information continues to be sent, and a T value does not take effect.
3. If the base station does not detect the uplink data sent by the UE, no uplink scheduling grant is not sent even if there is another downlink scheduling for the UE within T time.
4. In case of downlink scheduling, the uplink scheduling is still not received, then T is increased to 2T until kT.
5. Values of k and T are agreed in advance in the standard.
6. When the number of times reaches k, if there is no uplink data, then pre-scheduling is stopped; or kT is kept unchanged, depending on the implementation of the base station.
7. The meaning of kT is a time interval between second pre-scheduling and first pre-scheduling, and a minimum value of kT is T.
8. Uplink data may also be detected for n times, and a minimum value of n is 1, that is, after no uplink data is detected for n times, the pre-scheduling period is increased by one T time.

An embodiment of the present disclosure further provides a transmission scheduling apparatus, which is applied to a base station for wireless communication. As shown in FIG. 6, the transmission scheduling apparatus 100 includes a first control module 110.

The first control module 110 is configured to perform uplink pre-scheduling for the base station, and adjust a time interval for the uplink pre-scheduling based on a reception of uplink data on a resource scheduled by the uplink pre-scheduling for a predetermined number of times.

In an embodiment, the first control module 110 includes a first control submodule 111.

The first control submodule 111 is configured to increase the time interval for the uplink pre-scheduling in response to not receiving the uplink data on the resource scheduled by the uplink pre-scheduling for the predetermined number of times.

In an embodiment, the first control submodule 111 includes a control unit 1111.

The control unit 1111 is configured to determine a sum of a current time interval for the uplink pre-scheduling and a time interval increment as the time interval for the uplink pre-scheduling.

In an embodiment, the apparatus 100 further includes a second control module 120.

The second control module 120 is configured to maintain the current time interval for the uplink pre-scheduling in response to not receiving the uplink data on the resource scheduled by the uplink pre-scheduling for the predetermined number of times, and in response to the current time interval for the uplink pre-scheduling being greater than or equal to an interval threshold.

In an embodiment, the apparatus 100 further includes a third control module 130.

The third control module 130 is configured to stop the uplink pre-scheduling in response to not receiving the uplink data on the resource scheduled by the uplink pre-scheduling for the predetermined number of times, and in response to the current time interval of the uplink pre-scheduling being greater than or equal to an interval threshold.

In an embodiment, the interval threshold is an integer multiple of the time interval increment.

In an embodiment, the first control module 110 includes a second control submodule 112.

The second control submodule 112 is configured to determine the time interval for the uplink pre-scheduling as a predetermined time interval in response to receiving the uplink data on the resource scheduled by the uplink pre-scheduling for the predetermined number of times.

In an embodiment, the uplink pre-scheduling is performed in response to scheduling downlink data and the downlink data scheduled satisfying a pre-scheduling condition.

In an embodiment, the uplink pre-scheduling includes sending an uplink grant (UL Grant).

In an illustrative embodiment, the first control module 110, the second control module 120, the third control module 130, etc. can be implemented by one or more central processing units (CPUs), graphics processing units (GPUs), baseband processors (BPs), application specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic elements, for performing the above-mentioned method.

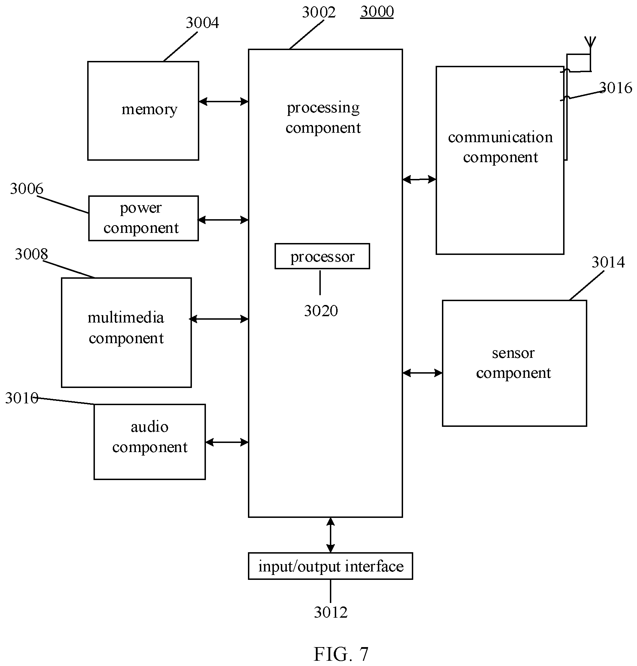

FIG. 7 is a block diagram showing an apparatus 3000 for transmission scheduling according to an illustrative embodiment. For example, the apparatus 3000 can be a mobile phone, a computer, a digital broadcast terminal, a messaging device, a game console, a tablet device, a medical device, a fitness device, a personal digital assistant, or the like.

Referring to FIG. 6, the apparatus 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the apparatus 3000, such as the operations associated with display, phone calls, data communications, camera operations, and recording operations. The processing component 3002 can include one or more processors 3020 to execute instructions to perform all or some of the steps in the above-described methods. Moreover, the processing component 3002 may include one or more modules which facilitate the interaction between the processing component 3002 and other components. For instance, the processing component 3002 may include a multimedia module to facilitate the interaction between the multimedia component 3008 and the processing component 3002.

The memory 3004 is configured to store various types of data to support the operation of the apparatus 3000. Examples of such data include instructions for any applications or methods operated on the apparatus 3000, contact data, phonebook data, messages, pictures, videos, etc. The memory 3004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 3006 provides power to various components of the apparatus 3000. The power component 3006 may include a power management system, one or more power sources, and any other components associated with the generation, management, and distribution of power in the apparatus 3000.

The multimedia component 3008 includes a screen providing an output interface between the apparatus 3000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 3008 includes a front camera and/or a rear camera. The front camera and/or the rear camera may receive an external multimedia datum while the apparatus 3000 is in an operation mode, such as a photographing mode or a video mode. Each of the front camera and the rear camera may be a fixed optical lens system or have focus and optical zoom capability.

The audio component 3010 is configured to output and/or input audio signals. For example, the audio component 3010 includes a microphone (MIC) configured to receive an external audio signal when the apparatus 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker to output audio signals.

The I/O interface 3012 provides an interface between the processing component 3002 and peripheral interface modules, such as keyboards, click wheels, buttons, and the like. The buttons may include, but are not limited to, a home button, a volume button, a starting button, and a locking button.

The sensor component 3014 includes one or more sensors to provide status assessments of various aspects of the apparatus 3000. For instance, the sensor component 3014 may detect an open/closed status of the apparatus 3000, relative positioning of components, e.g., the display and the keypad, of the apparatus 3000, a change in position of the apparatus 3000 or a component of the apparatus 3000, a presence or absence of user contact with the apparatus 3000, an orientation or an acceleration/deceleration of the apparatus 3000, and a change in temperature of the apparatus 3000. The sensor component 3014 may include a proximity sensor configured to detect the presence of nearby objects without any physical contact. The sensor component 3014 may further include a light sensor, such as a CMOS or CCD image sensor, for use in imaging applications. In some embodiments, the sensor component 3014 may further include an accelerometer sensor, a gyroscope sensor, a magnetic sensor, a pressure sensor, or a temperature sensor.

The communication component 3016 is configured to facilitate communication, wired or wireless, between the apparatus 3000 and other devices. The apparatus 3000 can access a wireless network based on a communication standard, such as Wi-Fi, 2G, or 3G, or a combination thereof. In an illustrative embodiment, the communication component 3016 receives a broadcast signal or broadcast associated information from an external broadcast management system via a broadcast channel. In an illustrative embodiment, the communication component 3016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the apparatus 3000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method.

In an illustrative embodiment, there is also provided a non-transitory computer readable storage medium including instructions, such as included in the memory 3004, executable by the processor 3020 in the apparatus 3000, for completing the above-mentioned method. For example, the non-transitory computer-readable storage medium may be a ROM, a random access memory (RAM), a CD-ROM, a magnetic tape, a floppy disc, an optical data storage device, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as illustrative only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A transmission scheduling method, applied to a base station, comprising:
performing uplink pre-scheduling for the base station, and adjusting a time interval for the uplink pre-scheduling based on a reception of uplink data on a resource scheduled by the uplink pre-scheduling for a predetermined number of times.

2. The method of claim 1, wherein adjusting the time interval for the uplink pre-scheduling based on the reception of uplink data on the resource scheduled by the uplink pre-scheduling for the predetermined number of times comprises:
increasing the time interval for the uplink pre-scheduling in response to not receiving the uplink data on the resource scheduled by the uplink pre-scheduling for the predetermined number of times.

3. The method of claim 2, wherein increasing the time interval for the uplink pre-scheduling comprises:
determining a sum of a current time interval for the uplink pre-scheduling and a time interval increment as the time interval for the uplink pre-scheduling.

4. The method of claim 1, further comprising:
maintaining a current time interval for the uplink pre-scheduling in response to not receiving the uplink data on the resource scheduled by the uplink pre-scheduling for the predetermined number of times, and in response to the current time interval for the uplink pre-scheduling being greater than or equal to an interval threshold.

5. The method of claim 1, further comprising:
stopping the uplink pre-scheduling in response to not receiving the uplink data on the resource scheduled by the uplink pre-scheduling for the predetermined number of times, and in response to a current time interval for the uplink pre-scheduling being greater than or equal to an interval threshold.

6. The method of claim 4 or 5, wherein the interval threshold is an integer multiple of a time interval increment.

7. The method of any one of claims 1 to 5, wherein adjusting the time interval for the uplink pre-scheduling based on the reception of uplink data on the resource scheduled by the uplink pre-scheduling for the predetermined number of times comprises:
determining the time interval for the uplink pre-scheduling as a predetermined time interval in response to receiving the uplink data on the resource scheduled by the uplink pre-scheduling for the predetermined number of times.

8. The method of any one of claims 1 to 5, wherein the uplink pre-scheduling is performed in response to scheduling downlink data, and the downlink data scheduled satisfying a pre-scheduling condition.

9. The method of any one of claims 1 to 5, wherein the uplink pre-scheduling comprises: sending an uplink grant (UL Grant).

10. A transmission scheduling apparatus, applied to a base station, comprising:
a first control module configured to perform uplink pre-scheduling for the base station, and adjusting a time interval for the uplink pre-scheduling based on a reception of uplink data on a resource scheduled by the uplink pre-scheduling for a predetermined number of times.

11. The apparatus of claim 10, wherein the first control module comprises:
a first control submodule configured to increase the time interval for the uplink pre-scheduling in response to not receiving the uplink data on the resource scheduled by the uplink pre-scheduling for the predetermined number of times.

12. The apparatus of claim 11, wherein the first control submodule comprises:
a control unit configured to determine a sum of a current time interval for the uplink pre-scheduling and a time interval increment as the time interval for the uplink pre-scheduling.

13. The apparatus of claim 10, further comprising:
a second control module configured to maintain the current time interval for the uplink pre-scheduling in response to not receiving the uplink data on the resource scheduled by the uplink pre-scheduling for the predetermined number of times, and in response to the current time interval for the uplink pre-scheduling being greater than or equal to an interval threshold.

14. The apparatus of claim 10, further comprising:
a third control module configured to stop the uplink pre-scheduling in response to not receiving the uplink data on the resource scheduled by the uplink pre-scheduling for the predetermined number of times, and in response to the current time interval of the uplink pre-scheduling being greater than or equal to an interval threshold.

15. The apparatus of claim 13 or 14, wherein the interval threshold is an integer multiple of the time interval increment.

16. The apparatus of any one of claims 10 to 14, wherein the first control module comprises:
a second control submodule configured to determine the time interval for the uplink pre-scheduling as a predetermined time interval in response to receiving the uplink data on the resource scheduled by the uplink pre-scheduling for the predetermined number of times.

17. The apparatus of any one of claims 10 to 14, wherein the uplink pre-scheduling is performed in response to scheduling downlink data and the downlink data scheduled satisfying a pre-scheduling condition.

18. The apparatus of any one of claims 10 to 14, wherein the uplink pre-scheduling comprises: sending an uplink grant (UL Grant).

19. A communication device, comprising:
a processor;
a memory; and
an executable program stored in the memory and capable of being run by the processor,
wherein the processor is configured to execute steps of the transmission scheduling apparatus of any one of claims 1 to 9, or claims 10 to 18 when running the executable program.

20. A storage medium having stored therein executable programs that, when executed by a processor, cause steps of the transmission scheduling apparatus of any one of claims 1 to 9, or claims 10 to 18 to be implemented.
